# EUROPEAN PATENT APPLICATION

(11) **EP 4 787 591 A1**
(43) Date of publication of application: **05.08.2026**
(21) Application number: 25869589.9
(22) Date of filing: 01.07.2025
(51) Int. Cl.: H01M 50/367

(54) **BATTERY UNIT, AND BATTERY PACK AND VEHICLE INCLUDING SAME**

(30) Priority: 04.12.2024 KR 20240178665
(71) Applicant: LG ENERGY SOLUTION, LTD., Seoul 07335 (KR)
(72) Inventor: CHANG, Hyuk-Kyun, Daejeon 34122 (KR); KIM, Soo-Youl, Daejeon 34122 (KR); PARK, Ju-Hun, Daejeon 34122 (KR)
(74) Representative: Plasseraud IP
(86) International application number: PCT/KR2025/009345
(87) International publication number: WO 2026/121440

(57) **Abstract**

A battery unit of the present disclosure may include a cell assembly including a plurality of battery cells; a case accommodating the cell assembly; a busbar frame assembly including a first busbar frame covering one surface of the cell assembly, a second busbar frame covering the other surface of the cell assembly, and a top frame connecting the first busbar frame and the second busbar frame at the upper side of the cell assembly; a cover member covering the upper end of the cell assembly; and a block member positioned between the case and the cell assembly and partitioning a space between the cell assembly and the case.

## Description

### TECHNICAL FIELD

The present disclosure relates to a battery unit, and a battery pack and a vehicle including the same.

This application is based on and claims priority from Korean Patent Application No. 10-2024-0178665, filed on December 4, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to an electric vehicle (EV) or a hybrid electric vehicle (HEV) driven by electric power sources.

Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. When a higher output voltage is required, a plurality of battery cells may be connected in series to form a battery unit or a battery pack. Additionally, in order to increase the charging and discharging capacity, a plurality of battery cells may be connected in parallel to form a battery unit or a battery pack. Therefore, the number of battery cells included in the battery unit or battery pack may be variously set according to the required output voltage or the charging and discharging capacity.

When configuring a battery pack by connecting a plurality of battery cells in series/parallel, it is common to first configure a battery unit including at least one battery cell, and then use this at least one battery unit to add other components to configure a battery pack or a battery rack. Alternatively, recently, a battery pack in a cell to pack form where a plurality of battery cells are accommodated directly in a pack housing rather than being modularized has also been manufactured.

However, when multiple battery units are included inside a battery pack in this way, the battery pack may be vulnerable to thermal chain reactions between battery units. For example, if an event such as thermal runaway occurs inside any one battery unit, this thermal runaway may be propagated to other battery units. If the propagation of thermal runaway between battery units is not adequately suppressed, an event occurring in a specific battery unit may trigger a chain reaction across multiple battery units, which may cause a major problem such as an explosion or fire.

Therefore, even if a thermal event occurs in a battery cell within a battery unit, a structure capable of suppressing and delaying thermal propagation needs to be developed to prevent gas or flame from spreading to other cells within the battery unit or other adjacent battery units to cause thermal runaway.

Additionally, a structure capable of quickly discharging high-temperature gas or flame generated in the battery unit to the outside when thermal runaway occurs in the battery unit, thereby alleviating heat accumulation inside the battery unit, needs to be developed.

### DISCLOSURE

### Technical Problem

The present disclosure is designed to solve the problems of the related art, and therefore the present disclosure is directed to providing a battery unit that may quickly discharge high-temperature gas or flame generated in the battery unit to the outside when thermal runaway occurs in the battery unit, thereby alleviating heat accumulation inside the battery unit.

The present disclosure is also directed to providing a battery pack and a vehicle including such a battery unit.

However, technical problems to be solved by the present disclosure are not limited to the above-described problems, and other problems not mentioned herein may be clearly understood by those skilled in the art from the following description of the present disclosure.

### Technical Solution

In order to solve the above problem, a battery unit of the present disclosure may include a cell assembly including a plurality of battery cells; a case accommodating the cell assembly; a busbar frame assembly including a first busbar frame covering one surface of the cell assembly, a second busbar frame covering the other surface of the cell assembly, and a top frame connecting the first busbar frame and the second busbar frame at the upper side of the cell assembly; a cover member covering the upper end of the cell assembly; and a block member positioned between the case and the cell assembly and partitioning a space between the cell assembly and the case.

The case may have a first hole configured to allow gas generated in the battery cell to be discharged to the outside on one side thereof, and the first busbar frame may have a second hole facing the first hole of the case and configured to allow the gas to penetrate.

The cover member and the block member may be formed integrally.

A plurality of block members may be disposed to be spaced apart along a direction in which the battery cells are stacked.

The block member may be configured to extend long in the height direction of the first busbar frame.

The cover member may be provided to fill a space between the upper end of the cell assembly and the inner surface of the upper plate of the case.

The cover member may be positioned between the top frame and the cell assembly.

The block member may be provided on the outer side of the first busbar frame.

The block member may be configured to penetrate the busbar frame assembly.

The busbar frame assembly may further include at least one fastening member configured to couple the top frame and the first busbar frame.

The fastening member may include a plurality of fastening members spaced apart at a predetermined distance, and the block member may be configured to penetrate between the plurality of fastening members.

The battery unit may further include a vent blocking block interposed between the cell assembly and the first busbar frame.

The cell assembly may further include a barrier member provided between the battery cells, and the vent blocking block may be provided between the barrier member and the cell terrace where the electrode lead is drawn out from the battery cell.

The vent blocking blocks may be disposed in plurality on one side and the other side of the battery cell, respectively, and the vent blocking blocks may be provided on one side of the battery cell in a greater number than on the other side of the battery cell.

The battery cell may include a fixing member configured to fix the upper surface.

Additionally, the present disclosure provides a battery pack including a battery unit according to the present disclosure.

And, the present disclosure provides a vehicle including a battery pack according to the present disclosure.

### Advantageous Effects

According to one aspect of the present disclosure, there may be provided a battery unit that utilizes a directional vent structure capable of stably discharging gas or flame in an intended direction when a battery cell is ignited.

According to one aspect of the present disclosure, high-temperature gas or flame generated in the battery cell within the battery unit may be quickly discharged to the outside by inducing directional venting toward the rear side where no module terminals are provided. This may ensure the safety and reliability of the battery unit.

According to still another aspect of the present disclosure, the space between the upper ends of the battery cells and the upper surface of the case may be filled to suppress heat transfer at the upper ends of the battery cells.

Additionally, according to another aspect of the present disclosure, by partitioning the battery cells within the battery unit, even if a thermal event occurs in some battery cells within the battery unit, the gas or flame may be effectively prevented or delayed from being transferred to other battery cells within the battery unit to cause thermal runaway.

Additionally, according to still another aspect of the present disclosure, high-temperature gas or flame discharged to the outside of the battery unit may be prevented from flowing back into the battery unit.

Moreover, according to still another aspect of the present disclosure, even in a battery pack including multiple battery units, high-temperature gas or flame may be quickly discharged to the outside of the battery pack through directional venting.

Additionally, according to still another aspect of the present disclosure, events resulting from thermal runaway in a battery pack including multiple battery units or a device equipped with such units, for example, fire or explosion, may be prevented or delayed.

In addition, the present disclosure may have various other effects, which will be described in each embodiment, or descriptions of effects that may be easily inferred by those skilled in the art will be omitted.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a front perspective view of a battery unit according to an embodiment of the present disclosure.
FIG. 2 is a rear perspective view of a battery unit according to an embodiment of the present disclosure.
FIG. 3 is an exploded perspective view of the battery unit of FIG. 2.
FIG. 4 is a side view of a battery cell included in a battery unit according to an embodiment of the present disclosure.
FIG. 5 is a rear side cross-sectional view of the battery unit taken along line I-I' of FIG. 2.
FIG. 6 is an upper side cross-sectional view of the battery unit taken along line II-II' of FIG. 2.
FIG. 7 is a front view of a rear end cover of a module case according to an embodiment of the present disclosure.
FIG. 8 is a perspective view showing a busbar frame assembly according to an embodiment of the present disclosure.
FIG. 9 is a perspective view showing a rotatably coupled state of a busbar frame assembly according to an embodiment of the present disclosure.
FIG. 10 is a front view of a first busbar frame according to an embodiment of the present disclosure.
FIG. 11 is a perspective view showing a cover member and a block member according to an embodiment of the present disclosure.
FIG. 12 is an enlarged view of a block member according to an embodiment of the present disclosure.
FIG. 13 is a view showing a state in which a block member is rotated and bent according to an embodiment of the present disclosure. It is a perspective view showing a state in which a busbar frame assembly is rotatably coupled.
FIG. 14 is a view showing a state in which a block member and a busbar frame assembly are being coupled to each other according to an embodiment of the present disclosure.
FIG. 15 is a view showing a state in which a block member and a busbar frame assembly are assembled to a battery unit according to an embodiment of the present disclosure.
FIG. 16 is a view showing a state in which the block member of FIG. 15 is rotated and assembled to a first busbar frame.
FIG. 17 is a front view showing the battery unit of FIG. 16.
FIG. 18 is a side cross-sectional view showing the battery unit of FIG. 16.
FIG. 19 is a perspective view showing at least a portion of a battery unit to which a block member is coupled according to an embodiment of the present disclosure.
FIG. 20 is a perspective view showing at least a portion of the battery unit including the rear end cover of FIG. 19.
FIG. 21 is an enlarged cross-sectional view of a rear side of a battery unit to which a vent blocking block is applied according to an embodiment of the present disclosure.
FIG. 22 is an internal perspective view of a rear side of a battery unit to which a vent blocking block is applied according to an embodiment of the present disclosure.
FIG. 23 is a cross-sectional view of a front side of a battery unit to which a vent blocking block is applied according to an embodiment of the present disclosure.
FIG. 24 is an internal perspective view of a front side of a battery unit to which a vent blocking block is applied according to an embodiment of the present disclosure.
FIG. 25 is a view schematically showing the configuration of a battery pack according to an embodiment of the present disclosure.
FIG. 26 is a view for describing a vehicle including the battery pack of FIG. 25.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, the present disclosure includes various embodiments. For each embodiment, duplicate descriptions of substantially identical or similar configurations will be omitted, and differences will be mainly described.

Additionally, to help understanding of the present disclosure, the accompanying drawings are not illustrated on an actual scale, but the dimensions of some components may be exaggerated. Additionally, the same reference numeral may be assigned to the same component in different embodiments.

Although the first, second, and the like are used to describe various components, it is obvious that these components are not limited by these terms. These terms are used only to distinguish one component from another component, and unless expressly stated to the contrary, it is obvious that the first component may be the second component.

Throughout the specification, unless expressly stated to the contrary, each component may be singular or plural.

Hereinafter, when any configuration is disposed on the "upper (or lower)" of a component or "top (or bottom)" of a component, it may mean not only that any configuration is disposed in contact with the upper surface (or lower surface) of the component, but also that other configuration may be interposed between the component and any configuration disposed above (or below) the component.

Additionally, when it is described that a component is "connected", "coupled", or "in contact" to another component, the components may be directly connected to or in contact with each other, but it should be understood that other components may be "interposed" between each component, or each component may be "connected", "coupled", or "in contact" through another component.

As used herein, singular expressions include plural expressions unless the context clearly indicates otherwise. In this application, the terms "comprising" or "including" should not be construed as necessarily including all of the various components or various steps described in the specification, but rather should be construed as not including some of the components or some of the steps, or as further including additional components or steps.

Throughout the specification, when referring to "A and/or B", it means A, B or A and B, unless expressly stated to the contrary, and when referring to "C to D", it means C or more and D or less, unless expressly stated to the contrary.

Meanwhile, terms indicating directions such as upper, lower, left, right, front, and back may be used in the present disclosure, but these terms are only for convenience of description, and it is obvious to those skilled in the art that the terms may vary depending on the position of a reference object or an observer.

For example, in the embodiment of the present disclosure, the X-axis direction illustrated in the drawings may mean a width direction or left-right direction, the Y-axis direction may mean a length direction or front-back direction perpendicular to the X-axis direction on the horizontal plane (X-Y plane), and the Z-axis direction may mean an upperlower direction (vertical direction) perpendicular to both the X-axis direction and the Y-axis direction.

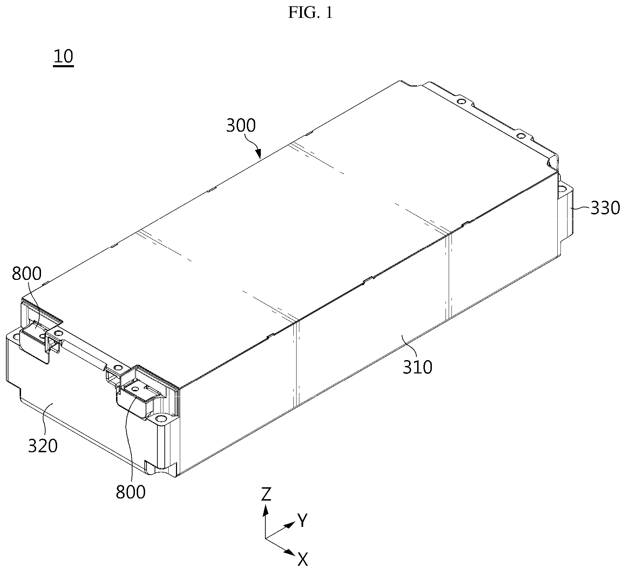

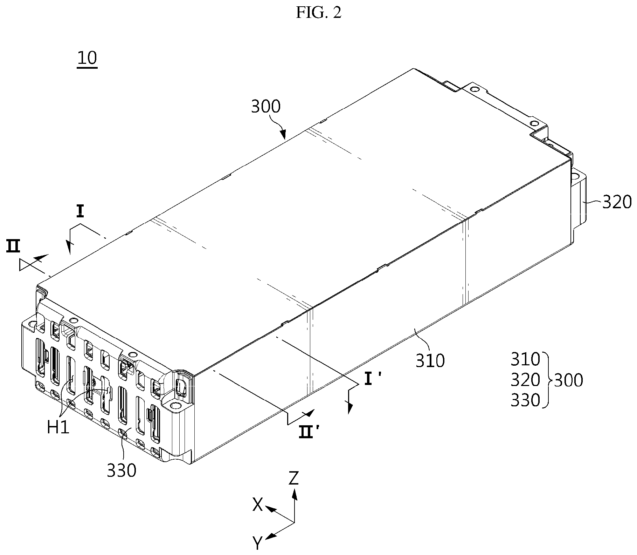

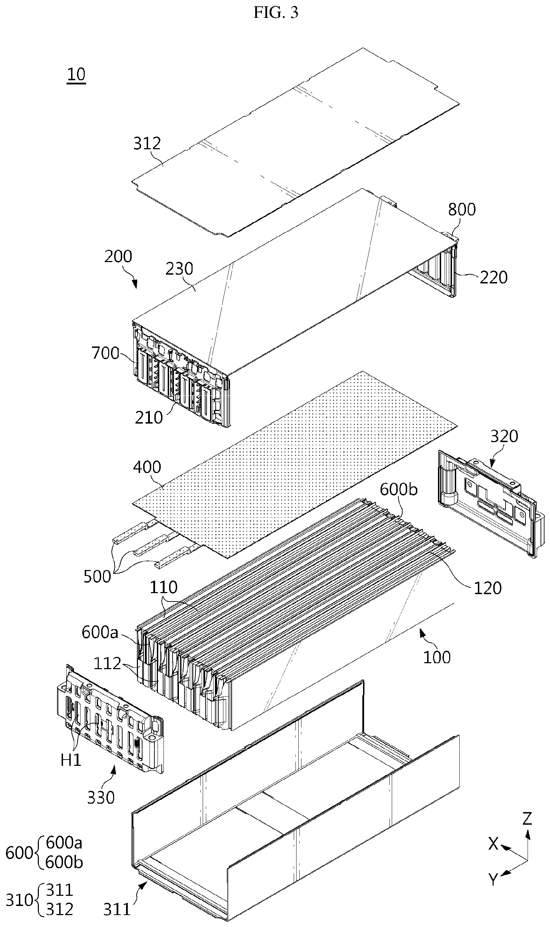

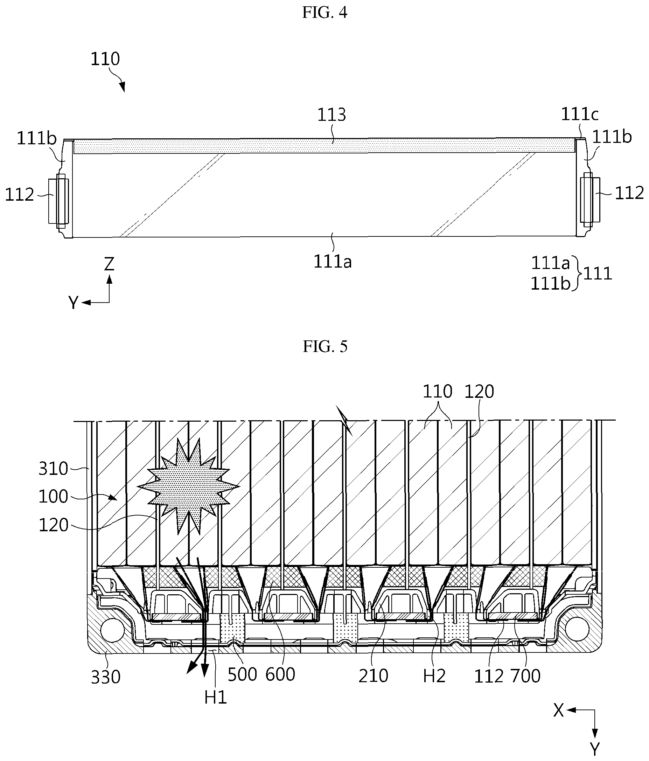

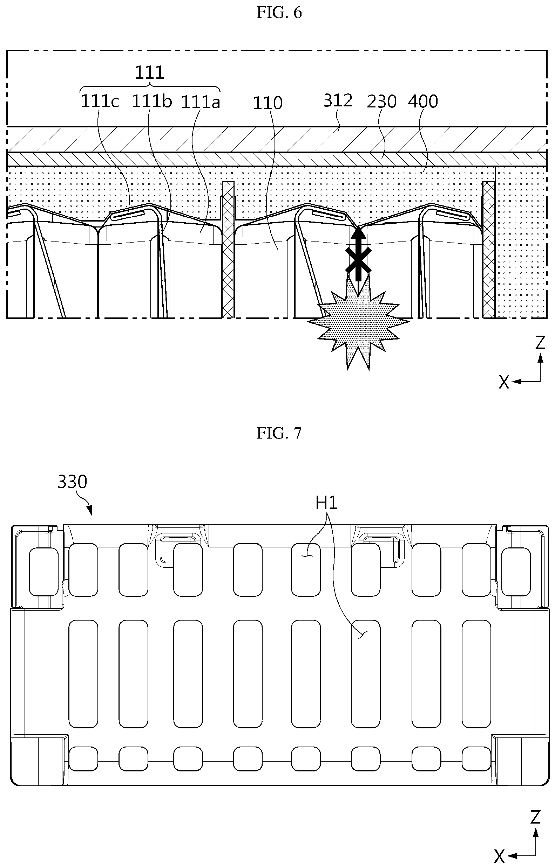

FIG. 1 is a front perspective view of a battery unit 10 according to an embodiment of the present disclosure, FIG. 2 is a rear perspective view of a battery unit 10 according to an embodiment of the present disclosure, FIG. 3 is an exploded perspective view of the battery unit 10 of FIG. 2, and FIG. 4 is a side view of a battery cell included in a battery unit 10 according to an embodiment of the present disclosure. FIG. 5 is a rear side cross-sectional view of the battery unit 10 taken along line I-I' of FIG. 2. FIG. 6 is an upper side cross-sectional view of the battery unit 10 taken along line II-II' of FIG. 2.

Referring to FIGS. 1 to 6, the battery unit 10 according to an embodiment of the present disclosure may include a cell assembly 100, a busbar frame assembly 200, a case 300, a cover member 400, and a block member 500. The battery unit 10 may further include a vent blocking block 600, a busbar 700, and a module terminal 800 in addition to the above-described components. Here, the battery unit 10 may refer to as a battery module or a cell stack.

First, referring mainly to FIG. 3, the cell assembly 100 may include a battery cell 110. The battery cell 110 may be provided in plurality. At this time, the plurality of battery cells 110 may be electrically connected to each other.

The plurality of battery cells 110 may be stacked along one direction. For example, as illustrated in FIG. 3, the plurality of battery cells 110 may be disposed in parallel in the left-right direction (X-axis direction) while being upright in the vertical direction (Z-axis direction).

More specifically, referring to FIG. 4, the plurality of battery cells 110 may include an electrode assembly and a cell case 111 that accommodates the electrode assembly. The cell case 111 may be a laminate sheet including a resin layer and a metal layer.

Referring to FIG. 4, when the battery cell 110 of the present disclosure is provided as a pouch-type battery cell, the cell case 111 may include a receiving portion 111a and a sealing portion 111b.

The receiving portion 111a may be configured to accommodate an electrode assembly. The receiving portion 111a is an internal space having a concave surface facing the electrode assembly, and the electrode assembly may be mounted in this internal space. In the embodiment illustrated in FIG. 4, the receiving portion 111a may have a double cup shape formed on both sides of the cell case 111.

The receiving portion 111a may be configured to extend in one direction. That is, the receiving portion 111a may be configured to extend in the length direction of the battery cell 110.

The peripheral edge of the receiving portion 111a may be thermally fused to form a sealing portion 111b. That is, the sealing portion 111b may be provided by sealing the outer periphery of the receiving portion 111a. As in the embodiment illustrated in FIG. 4, the sealing portion 111b may be provided on three of the four side surfaces of the battery cell 110.

At this time, the sealing portion 111b may be configured to protrude from the receiving portion 111a in one direction. The sealing portion 111b may be configured to protrude further than the receiving portion 111a in one direction. At the ends of the battery cell 110, the receiving portions 111a may be provided in close contact with each other, and a predetermined space may be formed between the sealing portions 111b.

Additionally, the electrode lead 112 may be configured to protrude toward the front and/or rear sides of the receiving portion 111a or the sealing portion 111b of the battery cell 110.

Meanwhile, the battery cell 110 may be provided in an upright state with the surface that does not include the sealing portion 111b facing downward. As illustrated in FIG. 4 or the like, the plurality of battery cells 110 may be disposed in parallel in the left-right direction (X-axis direction) while being upright in the vertical direction (Z-axis direction). At this time, in each battery cell 110, the sealing portion 111b may face the front-back direction (Y-axis direction) and upward (+Z-axis direction), and the receiving portion 111a may face the left-right direction (X-axis direction).

Additionally, the plurality of battery cells 110 may each be provided with an electrode lead 112. The electrode lead 112 is connected to the electrode assembly and may be drawn out to the outside of the cell case 111 to function as an electrode terminal.

The electrode leads 112 may be provided in a pair, and the pair of electrode leads 112 may be drawn out from both ends of the battery cell 110, that is, in the length direction (±Y direction). At this time, the pair of electrode leads 112 may be a positive electrode lead and a negative electrode lead.

Additionally, referring to FIG. 3, the cell assembly 100 of the battery unit 10 according to an embodiment of the present disclosure may include a barrier member 120. The barrier member 120 may be provided between the battery cells 110 and configured to partition between the plurality of battery cells 110. In particular, at least one barrier member 120 may be included in one battery unit 10. The barrier member 120 may be provided in plurality along one direction in which the battery cells 110 are arranged.

The barrier member 120 may be provided in a form disposed for at least one battery cell 110. For example, as illustrated in FIG. 3, in the battery unit 10 according to an embodiment of the present disclosure, a barrier member 120 may be disposed for every two battery cells 110.

The barrier member 120 may be provided as an insulating pad thinner than the battery cell 110. The barrier member 120 may be made of a material having excellent heat resistance and/or fire resistance. Alternatively, the barrier member 120 may be provided in the form of a compressible pad, for example, made of a material such as silicone or aerogel.

According to the above embodiment of the present disclosure, the battery cells 110 may be partitioned or separated to prevent gas or flame from moving to other neighboring barrier members 120 and heat from spreading to other battery cells 110. Additionally, according to the above embodiment of the present disclosure, the barrier member 120 may contribute to the structural rigidity of the battery cells 110 by compressing the battery cell 110 when the battery cell 110 is swelling.

Meanwhile, the present disclosure is not limited by the specific type or shape of this battery cell 110, and various battery cells 110 known at the time of filing of the present disclosure may be employed to configure the battery unit 10 of the present disclosure. While the present embodiment targets a pouch-type secondary battery with high energy density and easy stacking as shown in the drawings, it is obvious that a cylindrical or prismatic secondary battery may be applied as the battery cell 110.

Referring to FIG. 3, the busbar frame assembly 200 may include a first busbar frame 210, a second busbar frame 220, and a top frame 230. The first busbar frame 210 may cover one surface of the cell assembly 100. The second busbar frame 220 may cover the other surface of the cell assembly 100. The first busbar frame 210 and the second busbar frame 220 may be disposed to face each other. For example, the first busbar frame 210 may cover the rear surface (one surface facing the +Y-axis direction) of the cell assembly 100, and the second busbar frame 220 may cover the front surface (one surface facing the -Y-axis direction) of the cell assembly 100.

The first busbar frame 210 and the second busbar frame 220 serve to support the busbar 700 or the module terminal 800 connected to the electrode leads 112 provided in each of the plurality of battery cells 110. The first busbar frame 210 and the second busbar frame 220 may be made of a material having electrical insulation properties, such as a plastic material.

The top frame 230 may connect the first busbar frame 210 and the second busbar frame 220. The top frame 230 may connect the first busbar frame 210 and the second busbar frame 220 at the upper side of the cell assembly 100. The top frame 230 may be disposed at the upper side of the cell assembly 100.

According to the embodiment of the present disclosure, referring to FIG. 6, when a thermal event occurs in the battery cell 110, venting gas may be suppressed or blocked from being discharged toward the upper part of the battery cell 110. Additionally, the first busbar frame 210 and the second busbar frame 220 may be connected and assembled integrally, thereby improving assemblability and simplifying the manufacturing process.

Referring to FIG. 3, the case 300 may be configured to accommodate the cell assembly 100. Specifically, the case 300 may be configured to form a receiving space and accommodate the cell assembly 100 in the receiving space. This case 300 may be made of a metal material having rigidity and heat resistance to physically or chemically protect the accommodated cell assembly 100.

More specifically, referring to FIGS. 1 to 3, the case 300 may include a case body 310, a front end cover 320, and a rear end cover 330.

The case body 310 may include a U-frame 311 and a top plate 312. The U-frame 311 may include a pair of side plates covering the left side surface and the right side surface of the cell assembly 100 and a base plate covering the lower surface of the cell assembly 100. The pair of side plates and the base plate may be formed integrally.

The top plate 312 may be configured to cover the upper surface of the cell assembly 100. This top plate 312 may be coupled to the U-frame 311 by welding. This case body 310 may be formed as a rectangular tubular shape with open front and rear surfaces. As an alternative to the present embodiment, a mono frame-type case 300 with an integrated U-frame 311 and top plate 312 may be employed.

The front end cover 320 and the rear end cover 330 may be respectively coupled to the open front and rear surfaces of the case body 310. The front end cover 320 and the rear end cover 330 may be coupled to the case body 310 by welding or a snap-fit structure.

Referring mainly to FIG. 3, the cover member 400 may cover the upper end of the cell assembly 100. For example, the cover member 400 may have a plate shape or a sheet shape. The cover member 400 may be configured to suppress the upward venting of gas in the battery cell 110. This cover member 400 may be made of a material with excellent fire resistance. The cover member 400 may include, for example, a fire-resistant and/or heatresistant and/or insulating material. For example, the cover member 400 may be implemented as a flame-retardant urethane foam, polyurethane foam, or silicone foam pad.

The cover member 400 may preferably be provided to fill a space between the upper end of the cell assembly 100 and the inner surface of the upper plate of the case 300. According to an embodiment, the cover member 400 may be made of a compressible material to completely fill the space between the upper end of the cell assembly 100 and the inner surface of the upper plate (e.g., the top plate 312) of the case 300. For example, the cover member 400 may be configured to be pressed toward the upper end of the cell assembly 100 by the above-described top plate 312, that is, the upper plate of the case 300, thereby filling the space between the upper end of the cell assembly 100 and the upper plate of the case 300.

According to this embodiment, when a thermal event occurs in the battery cell 110, upward gas emission from the battery cell 110 may be suppressed. Additionally, as shown in FIG. 6, since there is no empty space between the top plate 312 of the case 300 and the upper end of the cell assembly 100, thermal energy propagation between the battery cells 110 through the upper end of the cell assembly 100 may be prevented. To elaborate, a gap may exist between the upper end of the cell assembly 100 and the upper surface of the case 300 due to a difference in surface roughness. This gap may become a passage for gas or flame to move inside the case 300. If the gas or flame flows along the gap, thermal energy propagation between the battery cells 110 may be accelerated. Additionally, the presence of the gap may interfere with directional venting toward the rear of the case 300. However, according to an embodiment of the present disclosure, the cover member 400 may eliminate the gap, thereby suppressing the propagation of thermal energy through the upper end of the cell assembly 100. Additionally, the cover member 400 may advantageously act for the directional venting of gas generated in the battery cell 110 toward the rear.

Referring to FIG. 3, the block member 500 may be positioned between the case 300 and the cell assembly 100. The block member 500 may be provided inside the case 300, as shown in FIG. 5. Specifically, the block member 500 may be provided between one side surface of the case 300 having the first hole H1 and the cell assembly 100.

The block member 500 may partition the space between the cell assembly 100 and the case 300. The block member 500 may be configured to partition the space through which gas or the like may flow into a plurality of spaces. The block member 500 may be configured to suppress venting gas from moving to an adjacent venting space. The block member 500 may be configured to induce gas or the like flowing through the space toward the first hole H1.

According to the embodiment of the present disclosure, by partitioning the space through which gas or the like may flow, when a thermal event occurs in the battery cell 110, the transfer of venting gas or flame to adjacent battery cells 110 is prevented, thereby effectively preventing or delaying thermal runaway propagation between the battery cells 110.

Meanwhile, a module terminal 800 may be provided on one side of the case 300. For example, as in the embodiments illustrated in FIGS. 1 and 3, the module terminal 800 may be provided on the front surface of the case 300. That is, the module terminal 800 may be provided on the front end cover 320.

Referring to FIGS. 1 and 3, the module terminal 800 may be configured to be electrically connected to a plurality of battery cells 110. Additionally, the module terminal 800 may be configured to be exposed on the other side surface of the case 300. For example, the module terminal 800 may be configured such that one side is connected to the electrode leads 112 of the battery cells 110 inside the case 300 and the other side is exposed to the outside of the front end cover 320 to be described later to function as a positive electrode terminal or a negative electrode terminal of the battery unit 10. The module terminal 800 may include a positive electrode terminal and a negative electrode terminal. Additionally, the module terminal 800 may be configured to be electrically or communicatively connected to a control device such as a BMS or the like.

Additionally, a first hole H1 may be formed in the case 300. The first hole H1 may be configured to allow venting gas generated in the battery cell 110 to be discharged to the outside of the case 300. In particular, the first hole H1 may be formed on the other side of the case 300, and here, the other side of the case 300 may mean a side opposite to one side of the case 300 where the module terminal 800 is provided. That is, the module terminal 800 and the first hole H1 may be provided on opposite sides. For example, as in the embodiment illustrated in FIG. 2, the first hole H1 may be formed on the rear surface of the case 300. That is, the module terminal 800(→first hole H1?) may be provided on the rear end cover 330.

In this way, the first hole H1 provided in the rear end cover 330 may be provided to discharge gas or flame generated inside the battery unit 10 to the outside of the battery unit 10 when thermal runaway of the battery unit 10 occurs. The remaining part of the case 300 except for the first hole H1 is sealed, and the gas or flame may be discharged with straightness toward the first hole H1.

Accordingly, directional venting in one direction may be possible in the battery unit 10 according to an embodiment of the present disclosure. For example, as illustrated in FIG. 5, directional venting toward the rear of the battery unit 10 may be possible through the first hole H1.

According to the embodiment of the present disclosure, even if a thermal event occurs at any position of the battery cell 110, the gas or flame generated in the battery cell 110 is discharged to the outside of the battery unit 10 through specific first holes H1 provided at the rear of the battery cell 110, thereby enabling smooth venting.

FIG. 7 is a front view of a rear end cover 330 of a module case 300 according to an embodiment of the present disclosure.

Referring to FIG. 7, a plurality of first holes H1 may be provided in the rear end cover 330. The first holes H1 may be disposed in at least one direction. The first holes H1 may be disposed along a plurality of rows. For example, as illustrated in FIG. 7, the first holes H1 may be disposed in a line along the height direction of the rear end cover 330, and the plurality of first holes H1 disposed in a line may be disposed in multiple rows along the stacking direction of the battery cells 110, that is, the width direction of the rear end cover 330. These plurality of first holes H1 may be provided at regular intervals between each other.

According to the embodiment of the present disclosure, even if a thermal event occurs in any one of the battery cells 110, venting gas or flame may be smoothly discharged to the outside of the case 300 through the first holes H1.

According to the embodiment of the present disclosure, when a thermal event occurs in the battery cell 110 within the battery unit 10, venting gas or the like may be discharged only in one targeted direction, for example, a direction in which the first hole H1 is formed, as indicated by the arrows illustrated in FIG. 5. That is, since all the outer periphery except for the first hole H1 based on the block member 500 is blocked, the directional venting of venting gas may be more effectively induced toward the first hole H1.

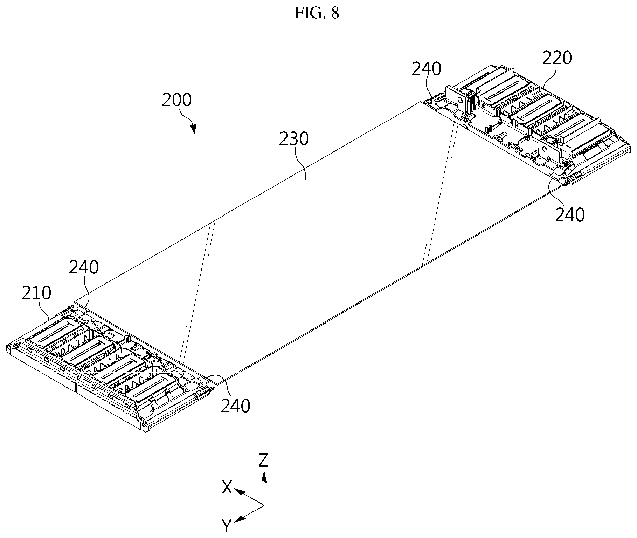

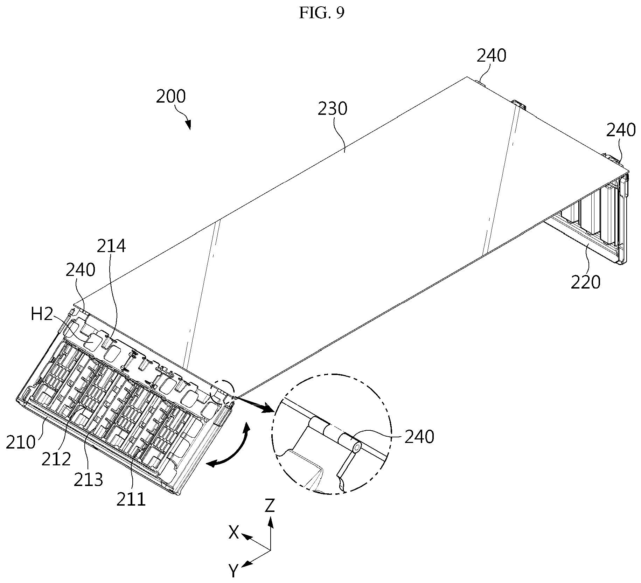

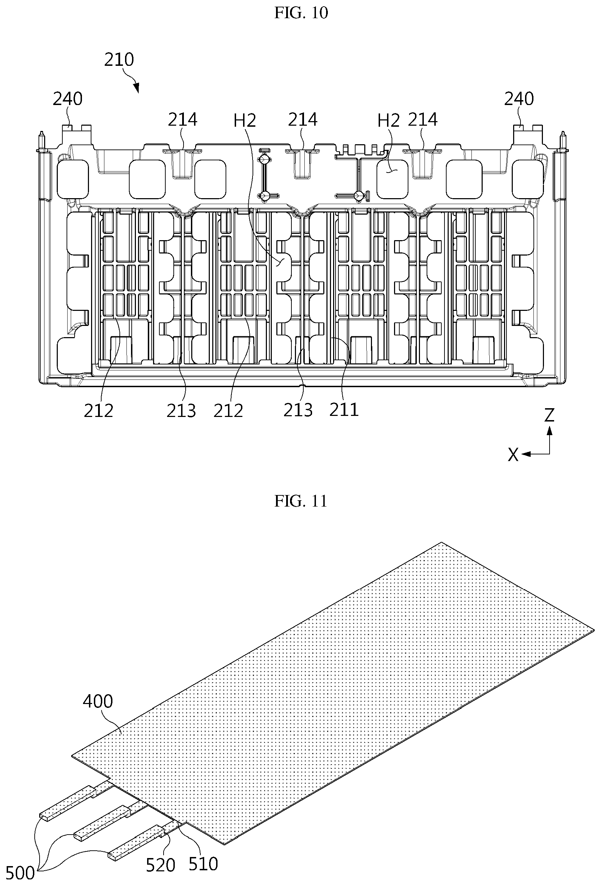

FIG. 8 is a perspective view showing a busbar frame assembly 200 according to an embodiment of the present disclosure. FIG. 9 is a perspective view showing a rotatably coupled state of a busbar frame assembly 200 according to an embodiment of the present disclosure. FIG. 10 is a front view of a first busbar frame 210 according to an embodiment of the present disclosure.

Referring to FIGS. 3 and 8, the first busbar frame 210 serves to support the busbar 700 connected to the electrode leads 112 provided in each of the plurality of battery cells 110. The first busbar frame 210 may be made of a material having electrical insulation properties, such as a plastic material.

Referring to FIGS. 3 and 8, the second busbar frame 220 may include the module terminal 800 connected to the electrode leads 112 provided in each of the plurality of battery cells 110. The second busbar frame 220 may be made of a material having electrical insulation properties, such as a plastic material.

The top frame 230 may connect the first busbar frame 210 and the second busbar frame 220. The top frame 230 may have, for example, a plate shape. The top frame 230 may be made of, for example, a plastic material. The top frame 230 may include any one of, for example, polycarbonate-acrylonitrile butadiene styrene (PC-ABS) or modified polyphenylene oxide (MPPO).

Referring to FIGS. 8 and 9, the first busbar frame 210 and the top frame 230, and the second busbar frame 220 and the top frame 230 may be rotatably coupled. According to an embodiment, the busbar frame assembly 200 may further include at least one fastening member 240. The fastening member 240 may be configured to couple the top frame 230 and the first busbar frame 210. Additionally, the fastening member 240 may be configured to couple the top frame 230 and the second busbar frame 220.

The fastening member 240 may be coupled such that the top frame 230 and the first busbar frame 210, and the second busbar frame 220 and the top frame 230 are rotatable to each other. The first busbar frame 210 and the second busbar frame 220 may be rotated, for example, by approximately 90 degrees or more and 180 degrees or less based on the top frame 230.

When assembling the busbar frame assembly 200 to the battery unit 10, the first busbar frame 210, the top frame 230, and the second busbar frame 220 that are disposed horizontally side by side may be provided. Thereafter, the first busbar frame 210 and the second busbar frame 220 may be rotated by approximately 90 degrees based on the top frame 230 to be disposed to surround the upper side, front surface, and rear surface of the cell assembly 100.

At least one fastening member 240 may be provided between the first busbar frame 210 and the top frame 230, and between the second busbar frame 220 and the top frame 230, respectively. For example, referring to FIG. 8, two fastening members 240 may be disposed between the first busbar frame 210 and the top frame 230, and two fastening members 240 may be disposed between the second busbar frame 220 and the top frame 230. The two fastening members 240 between the first busbar frame 210 and the top frame 230 may be disposed on the left and right sides, respectively.

According to the embodiment of the present disclosure, when assembling the busbar frame assembly 200 to the battery unit 10, the first busbar frame 210 and the second busbar frame 220 may be connected and assembled integrally, thereby improving assemblability. Additionally, the manufacturing process may be simplified.

Referring to FIG. 10, a second hole H2 facing the first hole H1 of the case 300 and configured to allow gas to penetrate may be formed in the first busbar frame 210 of the present disclosure. However, a hole corresponding to the second hole H2 may not be provided in the second busbar frame 220. According to such an embodiment, it is possible to more smoothly induce venting gas or flame to be discharged in one direction, particularly toward the rear of the case 300 where the first busbar frame 210 is disposed.

The second hole H2 may be configured to communicate with the first hole H1. The second hole H2 may be provided to at least partially face the first hole H1. The first hole H1 and the second hole H2 may be disposed along a roughly straight line.

According to the embodiment of the present disclosure, venting gas or flame may be discharged to the outside along a roughly straight line by the first hole H1 and the second hole H2. Accordingly, the venting gas or flame may be discharged more quickly to the outside of the battery unit 10.

Accordingly, according to the embodiment of the present disclosure, the venting gas may be quickly guided to the second hole H2 and the first hole H1 and discharged to the outside. That is, according to the embodiment of the present disclosure, heat accumulation inside the battery unit 10 may be prevented or suppressed. This may ensure the safety and reliability of the battery unit 10.

According to an embodiment, the first busbar frame 210 may further include a lead slot 211. The lead slot 211 may be provided to allow at least a portion of the electrode leads 112 of the plurality of battery cells 110 to pass therethrough. The lead slot 211 may be provided to allow the plurality of electrode leads 112 to pass therethrough in the +Y-axis or -Y-axis direction (front-back direction).

A plurality of lead slots 211 may be provided to be spaced apart from each other along the stacking direction (X-axis direction) of the battery cells 110. At this time, multiple electrode leads 112 passing through the lead slot 211 may be bent and attached to the busbar 700. Multiple battery cells 110 in which the electrode leads 112 are in contact with each other on the busbar 700 may be electrically connected to each other.

At this time, a busbar (e.g., the busbar 700 of FIG. 3) may be provided between a plurality of lead slots 211. Accordingly, the busbar 700 may be configured to be in direct contact with the electrode leads 112 passing through the lead slots 211. Specifically, the electrode leads 112 of the battery cells 110 pass through the lead slots 211 of the first busbar frame 210 and are drawn out to the outside of the first busbar frame 210, and the drawn out portion may be attached to the surface of the busbar 700 by welding or the like.

The busbar 700 may be made of a metal material, for example, copper, aluminum, or nickel. Additionally, the busbar 700 may be provided in the shape of a rod extending in the height direction.

According to an embodiment, the first busbar frame 210 may further include a busbar coupling portion 212. The busbar 700 may be attached to the outer surface of the busbar coupling portion 212 of the first busbar frame 210. To this end, the busbar 700 may also be positioned on the inner side of the electrode lead 112. That is, the busbar 700 may be positioned between the bent electrode lead 112 and the first busbar frame 210. At this time, the stacked electrode lead 112 and busbar 700 may be provided one by one for each busbar coupling portion 212.

The first busbar frame 210 may include a plurality of busbar coupling portions 212. The busbars 700 may be configured to be mounted one to each busbar coupling portion 212.

Meanwhile, referring to FIG. 10 again, a plurality of second holes H2 may be provided in the first busbar frame 210. The plurality of second holes H2 may be disposed along at least one direction. For example, the plurality of second holes H2 may be disposed in a line along the height direction of the first busbar frame 210. The second holes H2 may be provided in a form extending long along the height direction of the first busbar frame 210. At this time, the second holes H2 may be configured in a rib shape when the first busbar frame 210 is viewed from the front.

Additionally, the plurality of second holes H2 may be disposed along the stacking direction of the battery cells 110. The second holes H2 may be provided on the left and right sides of the busbar coupling portion 212. In this case, the second holes H2 may be positioned on both sides of each busbar 700.

And, some second holes H2 among the plurality of second holes H2 may be provided to be integrated with the lead slot 211. That is, the second hole H2 may be configured to allow at least some of the electrode leads 112 of the plurality of battery cells 110 to pass therethrough.

The remaining second holes H2 among the plurality of second holes H2 may be provided to be spaced apart from the lead slot 211 by a predetermined distance. These remaining second holes H2 may be configured to allow only a fluid such as a venting gas to pass therethrough.

According to an embodiment, the first busbar frame 210 may further include a block coupling portion 213. The block coupling portion 213 may be configured to allow a block member 500 to be inserted therein. The block coupling portions 213 may be provided in a number corresponding to the number of block members 500.

The block coupling portion 213 may be configured such that at least a portion of the outer surface of the first busbar frame 210 protrudes outward. At this time, the block coupling portion 213 may be configured to extend further outward than the outer surface of the busbar coupling portion 212.

This block coupling portion 213 may be provided between adjacent second holes H2. Additionally, the block member 500 may be provided on the outer side of the second hole H2. Accordingly, the block member 500 may be configured to at least partially face the second hole H2. At the same time, the block member 500 may be configured to be spaced apart from the second hole H2 by a predetermined distance. This allows the path of venting gas or flame discharged through the second hole H2 to remain unobstructed.

According to an embodiment, the first busbar frame 210 may further include a recessed portion 214. The recessed portion 214 may be a portion that is recessed downward from the upper side of the first busbar frame 210. The recessed portion 214 may be configured to allow the block member 500 to be inserted therein. The recessed portion 214 may be formed at a position corresponding to the block coupling portion 213. The recessed portions 214 may be provided in a number corresponding to the number of block members 500. A plurality of recessed portions 214 may be disposed on the upper side of each of the plurality of block coupling portions 213. Accordingly, the block member 500 may be inserted into the recessed portion 214 to be fixed in position, and assembly may be more convenient.

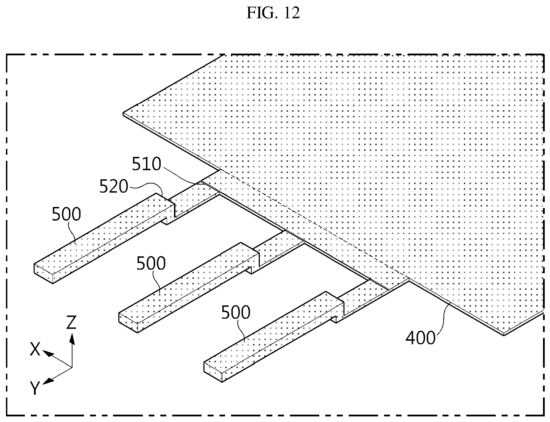

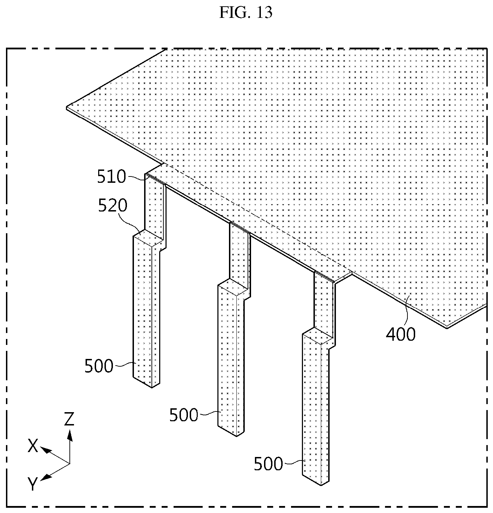

FIG. 11 is a perspective view showing a cover member 400 and a block member 500 according to an embodiment of the present disclosure. FIG. 12 is an enlarged view of a block member 500 according to an embodiment of the present disclosure. FIG. 13 is a view showing a state in which a block member 500 is rotated and bent according to an embodiment of the present disclosure. It is a perspective view showing a state in which a busbar frame assembly 200 is rotatably coupled.

Referring to FIGS. 11 to 13, the cover member 400 and the block member 500 may be formed integrally. In other words, the cover member 400 and the block member 500 may be configured as a single body. The block member 500 may be provided at one end of the cover member 400. Here, one end of the cover member 400 refers to a side facing the rear of the case 300. That is, the block member 500 may be formed to extend rearward from the rear end of the cover member 400.

The block member 500 may be bent and extend from one end of the cover member 400. Specifically, at least a portion of the block member 500 may be configured to be rotatable from the cover member 400. The block member 500 may include a bend portion 510 that is rotatable based on the cover member 400. For example, the bend portion 510 may have a shape in which the upper surface of the block member 500 is notched. That is, the block member 500 may be configured to be rotated downward based on the bend portion 510.

According to the above embodiment of the present disclosure, it is possible to suppress upward venting and induce rearward venting at the same time, thereby more effectively inducing directional venting toward the rear side. Additionally, the block member 500 and the cover member 400 may be assembled integrally rather than separately to the cell assembly 100, thereby improving assemblability.

According to an embodiment, the block members 500 may be provided in plurality. A plurality of block members 500 may be disposed to be spaced apart along the direction in which the battery cells 110 are stacked. That is, the block members 500 may be disposed to be spaced apart from each other along the left-right direction of the first busbar frame 210. The block member 500 may be configured to partition the space through which gas or the like may flow into a plurality of spaces. The block member 500 may be configured to suppress the movement of venting gas to an adjacent venting space.

The block member 500 may be disposed between the first busbar frame 210 and the rear end cover 330. The block member 500 may be configured to suppress the movement of gas along the stacking direction (X direction) of the battery cells 110 in the space between the first busbar frame 210 and the rear end cover 330. That is, the block member 500 may be provided on the outside of the first busbar frame 210 and configured to block the lateral movement of gas passing through the second hole H2 of the first busbar frame 210.

Accordingly, the block member 500 may be configured to be pressed in the front-back direction by the first busbar frame 210 and the rear end cover 330. In this case, the block member 500 may be in close contact with the first busbar frame 210 and the rear end cover 330, thereby more reliably blocking leakage of venting gas or flame through the gap.

The block member 500 may include an elastic material such as silicone. Accordingly, the block member 500 may be compressed by components inside the battery unit 10. Additionally, the block member 500 may have at least one of flame retardancy and fire resistance.

According to the embodiment of the present disclosure, by partitioning the space through which gas or the like may flow, when a thermal event occurs in the battery cell 110, the transfer of venting gas or flame to adjacent battery cells 110 is prevented, thereby effectively preventing or delaying thermal runaway propagation between the battery cells 110.

The block member 500 may be configured to extend long in the height direction of the first busbar frame 210. That is, the height of the block member 500 may be configured to correspond to the height of the first busbar frame 210. Additionally, the block member 500 may be formed to correspond to the shape and structure of the first busbar frame 210. For example, the block member 500 may further include a step portion 520.

According to the above embodiment of the present disclosure, the block member 500 may more reliably partition the space along the height direction of the first busbar frame 210. Accordingly, it is possible to more reliably suppress the movement of venting gas or the like to another space where other adjacent battery cells 110 are positioned.

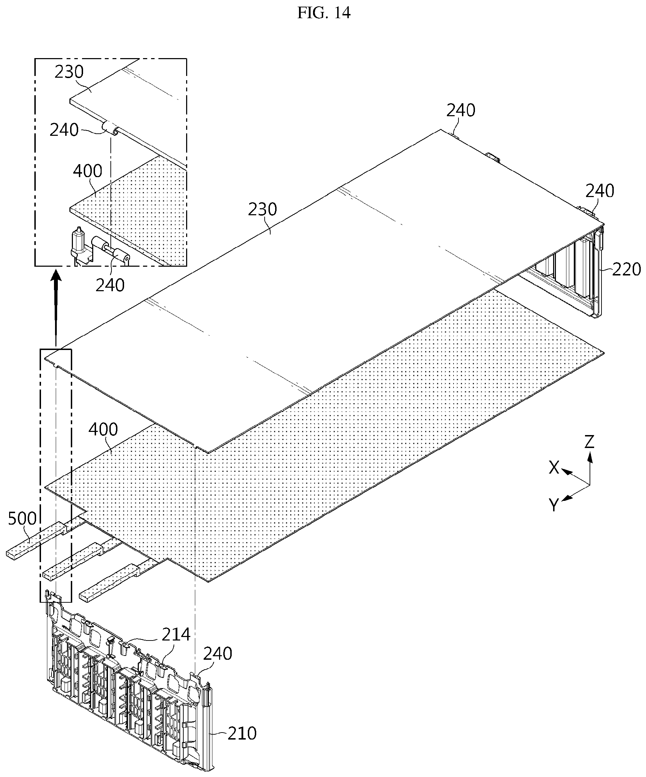

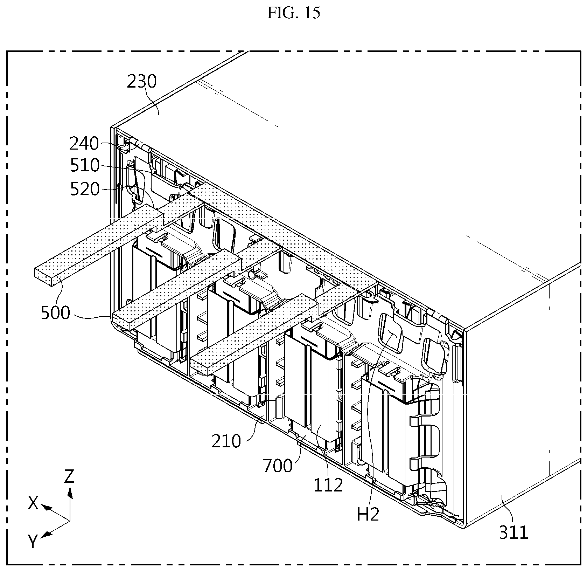

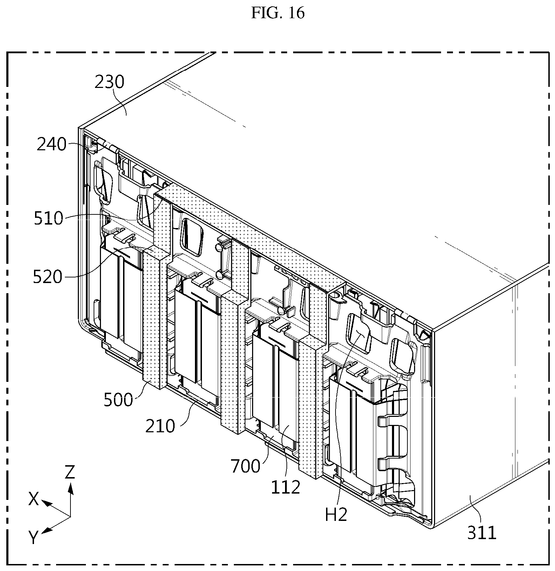

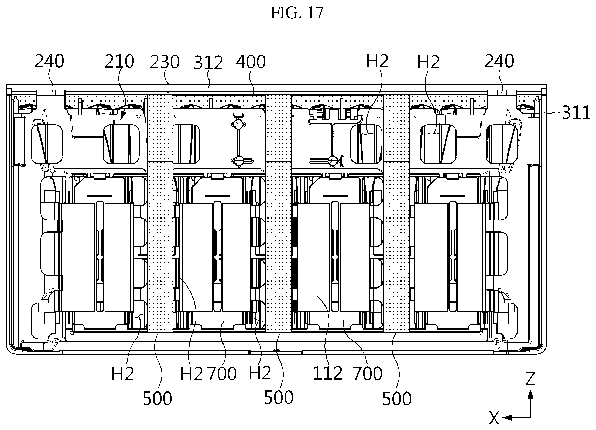

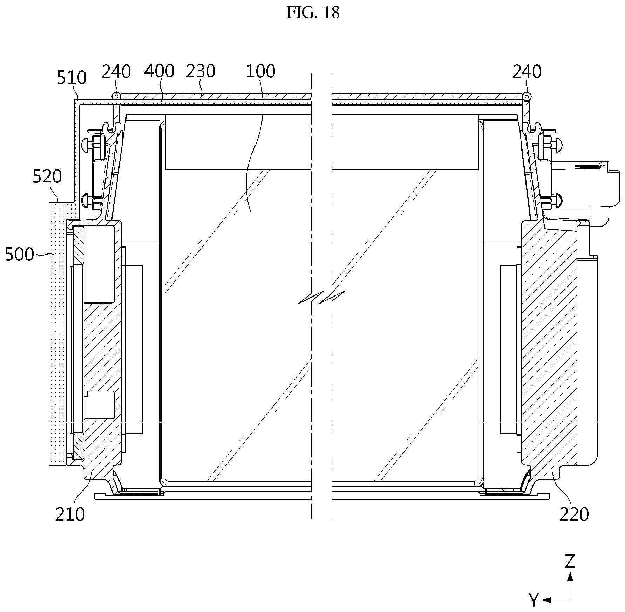

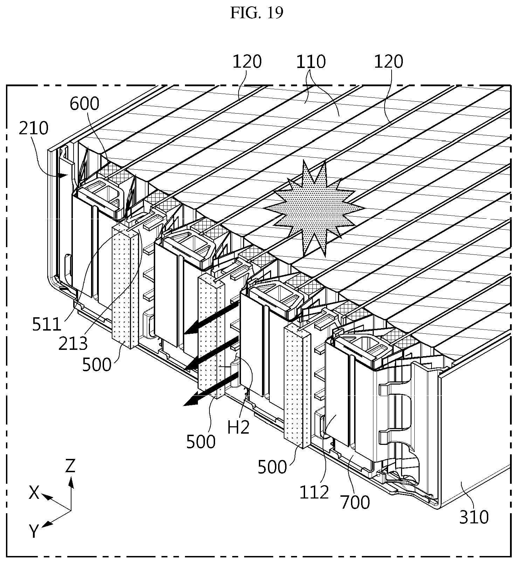

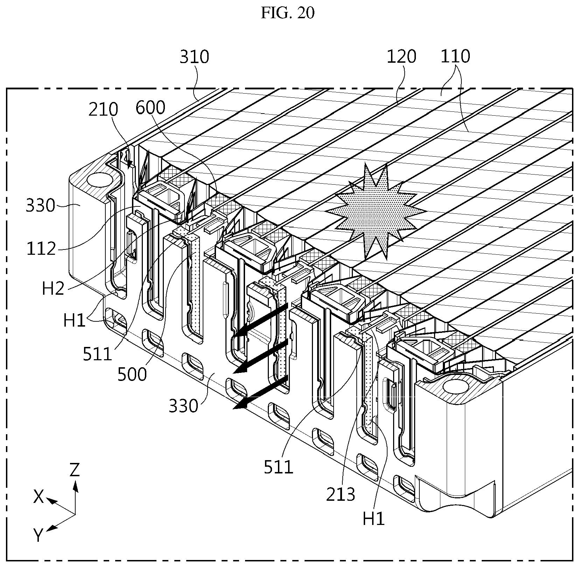

FIG. 14 is a view showing a state in which a block member 500 and a busbar frame assembly 200 are being coupled to each other according to an embodiment of the present disclosure. FIG. 15 is a view showing a state in which a block member 500 and a busbar frame assembly 200 are assembled to a battery unit 10 according to an embodiment of the present disclosure. FIG. 16 is a view showing a state in which the block member 500 of FIG. 15 is rotated and assembled to a first busbar frame 200. FIG. 17 is a front view showing the battery unit 10 of FIG. 16. FIG. 18 is a side cross-sectional view showing the battery unit 10 of FIG. 16. FIG. 19 is a perspective view showing at least a portion of a battery unit 10 to which a block member 500 is coupled according to an embodiment of the present disclosure. FIG. 20 is a perspective view showing at least a portion of the battery unit 10 including the rear end cover of FIG. 19.

Referring to FIG. 14, the cover member 400 may be positioned between the top frame 230 and the cell assembly 100. The cover member 400 may be positioned below the top frame 230. According to an embodiment, the cover member 400 may be attached to the lower surface of the top frame 230. For example, an adhesive may be applied between the cover member 400 and the top frame 230. For example, the lower surface of the top frame 230 may have at least one concave portion and/or at least one convex portion protruding downward, and the upper surface of the cover member 400 may have a convex portion protruding upward and inserted into the concave portion of the top frame 230 and a concave portion facing the convex portion of the top frame 230, thereby coupling and fixing the top frame 230 and the cover member 400. However, the method for coupling the cover member 400 and the top frame 230 is not limited by the above embodiment, and may be designed and modified in various ways.

According to the above embodiment of the present disclosure, the cover member 400 may prevent the top frame 230 from melting due to high-temperature gas or the like. When the top frame 230 melts due to high-temperature gas or the like, the structure of the busbar frame assembly 200 may collapse, and the structure of the first busbar frame 210 coupled to the top frame 230 may also collapse, thereby limiting directional venting toward the rear side. Additionally, since the upper space in which the top frame 230 was positioned becomes empty, it may be difficult to suppress upward venting. Therefore, the cover member 400 may be disposed between the top frame 230 and the cell assembly 100 to delay the melting of the top frame 230.

Referring to FIG. 14, the block member 500 may be provided on the outer side of the first busbar frame 210. The block member 500 may be disposed between the first busbar frame 210 and the rear end cover 330 of the case 300.

According to the above embodiment of the present disclosure, the block member 500 may partition the space through which gas or the like may flow between the first busbar frame 210 and the rear end cover 330 of the case 300 into a plurality of spaces. It is possible to block the movement of gas passing through the first busbar frame 210 along the direction in which the battery cells 110 are stacked in the space between the first busbar frame 210 and the case 300.

According to the above embodiment of the present disclosure, referring mainly to FIGS. 14 and 20, the cover member 400 and the block member 500 that are formed integrally may be disposed in different directions based on the busbar frame assembly 200. That is, in the integrally formed cover member 400 and block member 500, the cover member 400 may be disposed on the inner side of the top frame 230 of the busbar frame assembly 200. Additionally, in the integrally formed cover member 400 and block member 500, the block member 500 may be disposed on the outer side of the first busbar frame 210 of the busbar frame assembly 200.

Referring to FIG. 14, the block member 500 may be configured to penetrate the busbar frame assembly 200. That is, the block member 500 may be configured to penetrate between the first busbar frame 210 and the top frame 230. As the block member 500 penetrates between the first busbar frame 210 and the top frame 230, the block member 500 may be positioned outside the busbar frame assembly 200, and the cover member 400 may be positioned inside the busbar frame assembly 200.

According to the above embodiment of the present disclosure, the assembly of the cover member 400 and the block member 500 that are formed integrally with the busbar frame assembly 200 may be simpler and easier. Additionally, the assembly time may be shortened as compared with the respective arrangement and assembly of the cover member 400, the block member 500, the first busbar frame 210, and the top frame 230.

Referring to FIGS. 8 and 14, the fastening member 240 may be positioned between the top frame 230 and the first busbar frame 210. Additionally, the fastening members may be provided in plurality. The plurality of fastening members 240 may be spaced apart at a predetermined distance. The plurality of fastening members 240 may be positioned at the left end and the right end, respectively. An empty space may be formed between the plurality of fastening members 240. That is, an empty space surrounded by the plurality of fastening members 240, the top frame 230, and the first busbar frame 210 may be formed.

The block member 500 may be configured to penetrate between the plurality of fastening members 240. That is, at least a portion of the block member 500 and the cover member 400 that are formed integrally may penetrate between the plurality of fastening members 240 and between the top frame 230 and the first busbar frame 210.

However, the method for coupling the busbar frame assembly 200, the block member 500, and the cover member 400 is not limited by the above embodiment, and may be designed and modified in various ways. For example, a hole may be formed in the busbar frame assembly 200, and the block member 500 and the cover member 400 may be configured to penetrate the hole.

Hereinafter, the assembly process of the busbar frame assembly 200, the block member 500, and the cover member 400 will be briefly described. When the busbar frame assembly 200 is provided in a horizontally aligned state, the first busbar frame 210 and the second busbar frame 220 of the busbar frame assembly 200 may be rotated downward based on the top frame 230.

In the next step, as shown in FIG. 14, at least a portion of the integrally formed block member 500 and cover member 400 may penetrate between the first busbar frame 210 and the top frame 230. That is, in the integrally formed block member 500 and cover member 400, the block member 500 positioned at the rear may penetrate between the plurality of fastening members 240 formed between the first busbar frame 210 and the top frame 230. Thereafter, the cover member 400 may be attached to the top frame 230. However, this process may be omitted or replaced by another method.

In the next step, referring to FIG. 15, the coupled busbar frame assembly 200, block member 500, and cover member 400 may cover the upper surface, front surface, and rear surface of the cell assembly 100.

Thereafter, referring to FIGS. 16 to 18, the block member 500 may be folded downward based on the cover member 400 and coupled to the first busbar frame 210.

According to the above embodiment of the present disclosure, the busbar frame assembly 200, the block member 500, and the cover member 400 may be coupled and fixed in position without a separate coupling member between the busbar frame assembly 200 and the block member 500, thereby facilitating assembly and shortening assembly time.

Meanwhile, referring to FIGS. 19 and 20, the block member 500 may be provided between the busbars 700 and the electrode leads 112 connected thereto. In other words, the block member 500 may be disposed between the busbars 700 without blocking the second hole H2. Additionally, the plurality of block members 500 may be positioned so as not to block the first holes H1 of the rear end cover 330 and may be disposed to be spaced apart from each other by a predetermined distance in the left-right direction. That is, the block member 500 may be disposed to be positioned alternately with the first hole H1.

According to the above embodiment of the present disclosure, the block member 500 may guide venting gas or the like toward the first hole H1, thereby more reliably inducing directional venting of the venting gas or the like. Therefore, directional venting of the venting gas or the like toward the first hole H1 may be more effectively induced.

Meanwhile, referring to FIG. 20, the block member 500 may be configured such that at least a portion of the first busbar frame 210 is inserted therein.

Specifically, for example, the block member 500 may have an insertion groove 511 on the rear surface thereof. The insertion groove 511 may be provided in the form of a groove in which at least a portion of the block member 500 is recessed. The block member 500 may be fixed to the first busbar frame 210 by fitting the block coupling portion 213 provided on the first busbar frame 210 into the insertion groove 511.

According to this embodiment of the present disclosure, the adhesion and fixation of the block member 500 with respect to the first busbar frame 210 may be stably secured. Accordingly, the space between the first busbar frame 210 and the rear end cover 330 may be more reliably and stably partitioned by the block member 500, and the lateral movement of gas or flame in the space may be blocked.

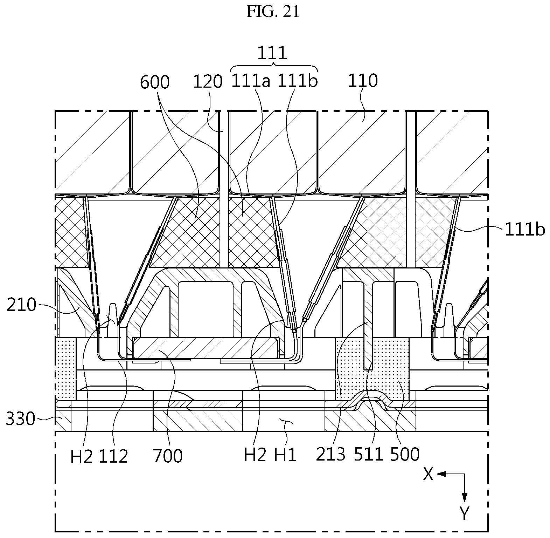

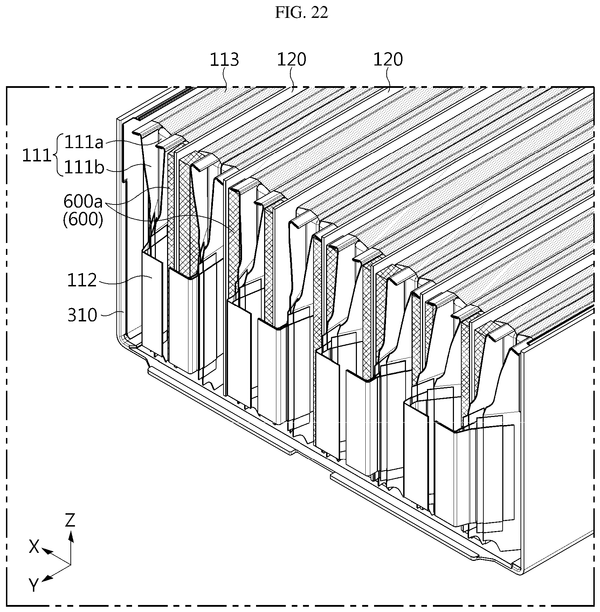

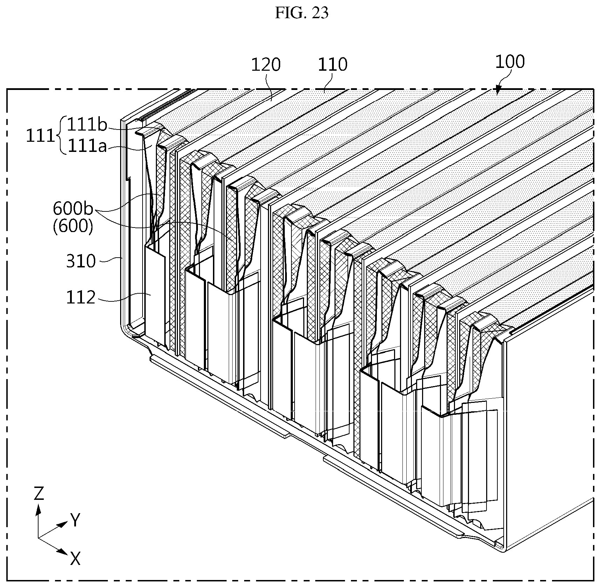

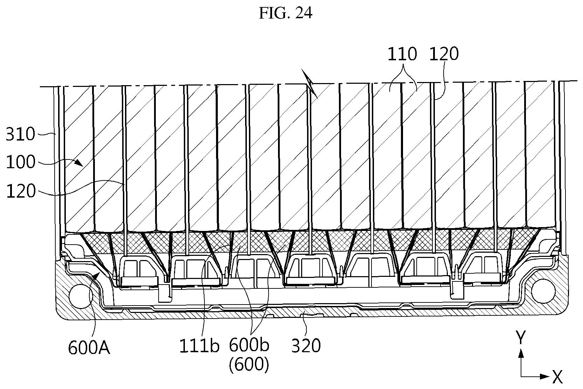

FIG. 21 is an enlarged cross-sectional view of a rear side of a battery unit 10 to which a vent blocking block 600 is applied according to an embodiment of the present disclosure. FIG. 22 is an internal perspective view of a rear side of a battery unit 10 to which a vent blocking block 600 is applied according to an embodiment of the present disclosure. FIG. 23 is a cross-sectional view of a front side of a battery unit 10 to which a vent blocking block 600 is applied according to an embodiment of the present disclosure. FIG. 24 is an internal perspective view of a front side of a battery unit 10 to which a vent blocking block 600 is applied according to an embodiment of the present disclosure.

Referring to FIGS. 21 to 24, the battery unit 10 according to an embodiment of the present disclosure may further include a vent blocking block 600.

The vent blocking block 600 may be configured to induce venting gas or flame to be discharged toward the rear side of the battery unit 10 in one direction. In particular, the vent blocking block 600 may be configured to suppress venting gas or flame from being discharged in a direction other than the rear side, particularly toward the front side.

The vent blocking block 600 may be interposed between the cell assembly 100 and the first busbar frame 210. The vent blocking block 600 may be provided on at least one side of the cell terrace 111b where the electrode lead 112 is drawn out from the battery cell 110. Specifically, the vent blocking block 600 may be disposed on the front and/or rear sides of the receiving portion 111a of the battery cell 110. In other words, due to the difference in thickness of the cell terrace 111b rather than the receiving portion 111a of the battery cell 110, empty spaces may exist around the cell terrace 111b, and the vent blocking block 600 may be interposed in these empty spaces to fill them. For example, the vent blocking block 600 may be disposed in contact with the front and/or rear sides of the receiving portion 111a. Additionally, the vent blocking block 600 may be configured such that one side surface contacts the receiving portion 111a and the other side surface contacts the first busbar frame 210.

The vent blocking block 600 may be interposed on the front and/or rear sides of the cell assembly 100. The vent blocking block 600 may include a rear vent blocking block 600a positioned at the rear of the cell assembly 100 and a front vent blocking block 600b positioned at the front of the cell assembly 100. In the present embodiment, the vent blocking block 600 is provided on both the front and rear sides of the cell assembly 100, but the rear vent blocking block 600a may be omitted and only the front vent blocking block 600b may be provided.

According to the above embodiment of the present disclosure, as the vent blocking block 600 is provided, it is possible to induce venting gas or flame to be discharged to the outside only in one direction, particularly through the first hole H1 provided at the rear side of the battery unit 10.

The vent blocking block 600 may be configured to press the side surface of the cell terrace 111b when the internal pressure inside the battery cell 110 increases. According to the above embodiment of the present disclosure, when a thermal event occurs in the battery cell, the vent blocking block 600 may press the cell terrace 111b that is relatively prone to rupture, thereby preventing venting gas and the like from being discharged through the cell terrace 111b.

Additionally, the vent blocking block 600 may be configured to extend long along the height of the battery cell 110. For example, the vent blocking block 600 may be configured to extend to the height of the receiving portion 111a of the battery cell 110.

According to the above embodiment of the present disclosure, the vent blocking block 600 may more reliably block the movement of venting gas or flame along the height direction of the battery cell 110. This may suppress the movement of venting gas or the like to other adjacent battery cells 110 to cause thermal propagation.

The vent blocking block 600 may include an elastic material. The vent blocking block 600 may include a material with high heat resistance. Additionally, the vent blocking block 600 may include a material with high flame resistance. Additionally, the vent blocking block 600 may include a material with electrical insulation properties. For example, the vent blocking block 600 may include a silicone material.

The vent blocking block 600 may be provided in plurality. The plurality of vent blocking blocks 600 may be disposed along the stacking direction of the battery cells 110, that is, the left-right direction. The vent blocking block 600 may be provided between the battery cells 110. The vent blocking block 600 may be provided on at least one side of the cell terrace 111b. That is, at least one side surface of the vent blocking block 600 may be configured to contact the cell terrace 111b. In other words, the vent blocking block 600 may be configured to contact the front and/or rear sides of the receiving portion 111a and the cell terrace 111b at the same time. According to the above embodiment of the present disclosure, the vent blocking block 600 may fix the cell terrace 111b.

Meanwhile, the barrier member 120 may be configured to extend in the front-back direction and protrude further than the sealing portion 111b in the front-back direction. That is, the length of the barrier member 120 may be provided longer than the length of the battery cell 110. Additionally, the barrier member 120 may be configured to contact the inner surface of the first busbar frame 210.

At this time, the vent blocking block 600 may be provided between the barrier member 120 and the battery cell 110. The vent blocking block 600 may be provided between the barrier member 120 and the sealing portion 111b. The vent blocking block 600 may be provided between the barrier member 120 and the cell terrace 111b where the electrode lead 112 is drawn out from the battery cell 110. The vent blocking block 600 may be configured such that one side surface contacts the end of the barrier member 120 and the other side surface contacts the sealing portion 111b of the battery cell 110.

The vent blocking block 600 may be provided on both sides of the barrier member 120. The vent blocking block 600 may be configured to compress the barrier member 120 at both sides. That is, the vent blocking block 600 may compress the barrier member 120 in the left-right direction. This allows the position of the barrier member 120 to be fixed. Additionally, it is possible to prevent the bending deformation of the barrier member 120 by the vent blocking block 600.

According to the above embodiment of the present disclosure, even if a thermal event occurs, it is possible to reduce the possibility that the high-temperature, high-pressure venting gas or flame resulting from the event is transferred to another space while pushing the end of the barrier member 120. As a result, according to the above embodiment of the present disclosure, even if a thermal event occurs in any battery cell 110, the venting gas or flame may be reliably suppressed or prevented from moving to other battery cells 110 to cause thermal propagation.

Additionally, a second hole H2 may be positioned between adjacent vent blocking blocks 600. Accordingly, the venting gas or flame generated in the battery cell 110 between adjacent vent blocking blocks 600 may be discharged to the outside of the battery unit 10 through the second hole H2.

For example, in the embodiment illustrated in FIG. 21, two battery cells 110 are provided between two adjacent barrier members 120, and these two barrier members 120 may each have the vent blocking block 600 on both rear side surfaces. Additionally, the second hole H2 may be provided between the vent blocking blocks 600 provided on the inner side of the two barrier members 120.

According to the above embodiment of the present disclosure, the gas or flame emitted from the battery cells 110 interposed between adjacent barrier members 120 may be discharged to the outside of the case 300 only through the second hole H2 positioned between the adjacent vent blocking block 600. As a result, the propagation of thermal runaway to other adjacent battery cells 110 may be prevented.

Meanwhile, the vent blocking block 600 may be configured to be fixed to the inner surface of the first busbar frame 210. For example, the vent blocking block 600 may be attached to the inner surface of the first busbar frame 210. Accordingly, the vent blocking block 600 may be configured to contact the receiving portion 111a and the first busbar frame 210 in the front-back direction, and the sealing portion 111b and/or the barrier member 120 in the left-right direction.

At this time, the vent blocking block 600 may be configured to receive a compressive force from all sides. For example, the vent blocking block 600 may be interposed in a compressed state by the receiving portion 111a, the sealing portion 111b, the first busbar frame 210, and/or the barrier member 120. The vent blocking block 600 may be configured to press the receiving portion 111a and the inner surface of the first busbar frame 210.

According to the above embodiment of the present disclosure, as the vent blocking block 600 is compressed and interposed in the front-back direction, the vent blocking block 600 may be in closer contact with the receiving portion 111a and the inner surface of the first busbar frame 210. Accordingly, the space formed by the vent blocking block 600 is further sealed, thereby preventing venting gas or flame from moving beyond the vent blocking block 600 to the space where other battery cells 110 are positioned.

Meanwhile, referring to FIGS. 21 to 24, the vent blocking blocks 600 may be disposed in plurality on one side and the other side of the battery cell 110, respectively. Here, one side of the battery cell 110 may mean the front side of the battery cell 110, and the other side may mean the rear side of the battery cell 110. At this time, the vent blocking blocks 600 may be provided on one side of the battery cell 110 in a greater number than on the other side of the battery cell 110. That is, the vent blocking blocks 600 may be provided on the front vent blocking block 600b at a higher density than on the rear vent blocking block 600a.

For example, as in the embodiments illustrated in FIGS. 23 and 24, the front vent blocking block 600b may be provided between each sealing portion 111b of the battery cells 110. That is, the front vent blocking block 600b may be interposed in both the space between the front sealing portions 111b of adjacent battery cells 110 and the space between the barrier member 120 and the front sealing portion 111b.

Additionally, the front vent blocking block 600b may provide a force for compressing the sealing portion 111b. The front vent blocking block 600b may compress the sealing portion 111b in the left-right direction. The front sealing portion 111b of the battery cell 110 may be positioned and fixed between the front vent blocking blocks 600b. And, the front vent blocking block 600b may be positioned to press the receiving portion 111a rearward.

On the other hand, referring to FIGS. 21 and 22, the rear vent blocking block 600a may be interposed only on both sides of the barrier member 120. Accordingly, a space where the venting gas or flame generated in the battery cell 110 may be vented may be provided between adjacent rear vent blocking blocks 600a.

According to the above embodiment of the present disclosure, when a thermal event occurs, the venting direction of venting gas or flame may be directed rearward. Specifically, when a thermal event occurs, the internal pressure of the sealing portion 111b of the battery cell 110 may increase. At this time, according to the above embodiment of the present disclosure, the vent blocking block 600 may disperse or reduce the pressure applied to the front sealing portion 111b of the battery cell 110 by compressing the front sealing portion 111b. This may suppress or block venting gas from being discharged through the front sealing portion 111b or the electrode lead 112 side. And, the pressure of venting gas may be concentrated on the rear sealing portion 111b of the battery cell 110. This allows the venting gas to be discharged through the rear sealing portion 111b of the battery cell 110.

Additionally, according to the above embodiment of the present disclosure, the vent blocking block 600 may prevent the front sealing portion 111b from being exposed to flame or high-temperature gas. As a result, the front sealing portion 111b may be prevented from being damaged by external flame or high-temperature gas, and the venting gas may be suppressed from being discharged through the front sealing portion 111b.

Additionally, according to the above embodiment of the present disclosure, the vent blocking block 600 may prevent the front sealing portion 111b from being damaged by external pressure by compressing and fixing the front sealing portion 111b.

Meanwhile, referring to FIG. 4 again, the battery cell 110 according to an embodiment of the present disclosure may further include a fixing member 113. The fixing member 113 may be configured to fix the upper surface of the battery cell 110.

More specifically, the cell case 111 may include a folding portion 111c provided to be bent on one side surface of the sealing portion 111b where the electrode lead 112 does not protrude. That is, the cell case 111 may have a folding portion 111c on the side sealing portion, which is the side of the sealing portion 111b where the electrode lead 112 is not provided. This folding portion 111c may be provided on the upper part of the battery cell 110.

The fixing member 113 may be provided to be attached to the folding portion 111c to fix the folded folding portion 111c. The fixing member 113 may be attached to the cell case 111 to surround the folding portion 111c along the thickness direction (X-axis direction) of the battery cell 110.

In particular, the fixing member 113 may be configured to extend long along the length direction of the battery cell 110. The length of the fixing member 113 may be configured to extend to the length of the battery cell 110. Accordingly, the fixing member 113 may be configured to fully cover the folding portion 111c of the battery cell 110 in the length direction.

According to the above embodiment of the present disclosure, when a thermal event occurs in the battery cell 110, the folding portion 111c positioned at the upper part may be suppressed from being opened. This may suppress or block venting gas from being discharged toward the upper part of the battery cell 110. Additionally, according to the above embodiment of the present disclosure, when a thermal event occurs in the battery cell 110, the rear sealing portion 111b may be opened, thereby inducing venting gas to be discharged through the rear sealing portion 111b of the battery cell 110.

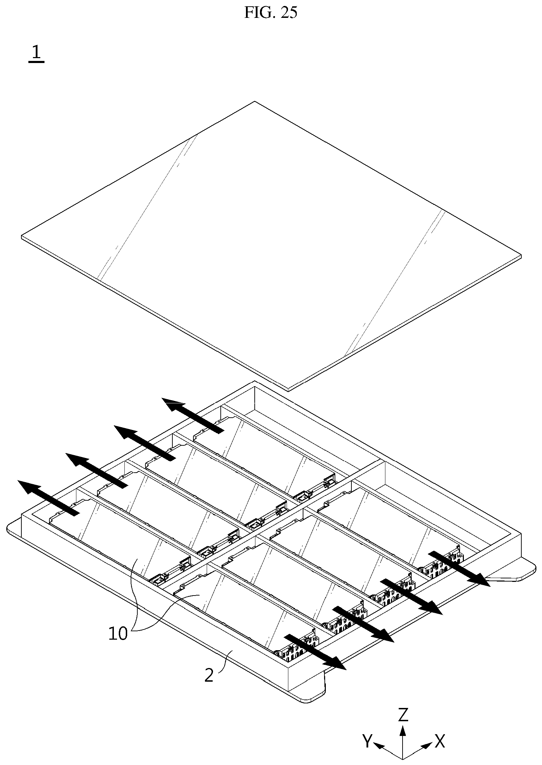

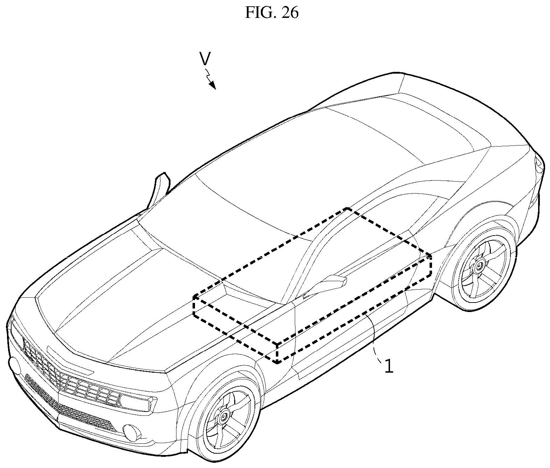

FIG. 25 is a view for describing a battery pack 1 including a battery unit 10 according to an embodiment of the present disclosure. FIG. 26 is a view for describing a vehicle including the battery pack 1 of FIG. 25.

Referring to FIG. 25, a battery pack 1 according to the present disclosure may include at least one battery unit 10 according to the present disclosure described above. The battery pack 1 according to the present disclosure may further include a battery management system (BMS) for integrated control of charging and discharging of one or more battery units 10, a current sensor, a fuse, and the like, and a pack case 2 for accommodating the above-described components. As illustrated, the battery pack 1 may be configured using a battery unit 10, which is an intermediate form of assembly, or may directly accommodate a cell assembly 100 without a battery unit 10. For example, the battery pack 1 of the present disclosure may be manufactured by a cell to pack process. For example, the battery pack 1 of the present disclosure may be manufactured by a cell to chassis process. Here, the battery unit 10 may refer to a battery module, a cell stack, or the like.

Referring to FIG. 25, a plurality of battery units 10 may be disposed such that one side surface including the module terminal 800 faces the inner side of the pack case 2. Accordingly, the other side surface of the battery unit 10 including the first hole H1 and the second hole H2 may be disposed to face the outer side of the pack case 2.

According to the above embodiment of the present disclosure, when a thermal event occurs in the battery cell 110 within the battery unit 10, venting gas or flame may be directionally vented toward the rear side of the battery unit 10. Accordingly, the venting gas or flame discharged toward the rear side may be quickly discharged to the outside of the battery pack 1.

Additionally, according to the above embodiment of the present disclosure, the direction of venting gas or flame toward the module terminal 800 may be minimized, thereby suppressing or preventing the thermal propagation to other adjacent battery units 10. Accordingly, events resulting from thermal runaway of the battery pack 1 including multiple battery units 10, such as fire or explosion, may be prevented or delayed.

Referring to FIG. 26, a vehicle V according to the present disclosure may include at least one battery pack 1 according to the present disclosure.

The battery cell 110 according to the present disclosure may be applied to a vehicle such as an electric vehicle or a hybrid vehicle. That is, the vehicle V according to the present disclosure may include a battery cell according to the present disclosure, a battery unit 10 according to the present disclosure, or a battery pack 1 according to the present disclosure. The vehicle V according to the present disclosure may be, for example, an electric vehicle, a hybrid vehicle, or a plug-in hybrid vehicle. The vehicle V includes a four-wheeled vehicle and a two-wheeled vehicle. The vehicle V operates by receiving power from the battery pack 1, the battery unit 10, or the cell assembly 100 according to an embodiment of the present disclosure.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

## Claims

1. A battery unit comprising:
a cell assembly comprising a plurality of battery cells;
a case accommodating the cell assembly;
a busbar frame assembly comprising a first busbar frame covering one surface of the cell assembly, a second busbar frame covering the other surface of the cell assembly, and a top frame connecting the first busbar frame and the second busbar frame at the upper side of the cell assembly;
a cover member covering the upper end of the cell assembly; and
a block member positioned between the case and the cell assembly and partitioning a space between the cell assembly and the case.

2. The battery unit according to claim 1,
wherein the case has a first hole configured to allow gas generated in the battery cell to be discharged to the outside on one side thereof, and
wherein the first busbar frame has a second hole facing the first hole of the case and configured to allow the gas to penetrate.

3. The battery unit according to claim 1,
wherein the cover member and the block member are formed integrally.

4. The battery unit according to claim 1,
wherein a plurality of block members are disposed to be spaced apart along a direction in which the battery cells are stacked.

5. The battery unit according to claim 1,
wherein the block member is configured to extend long in the height direction of the first busbar frame.

6. The battery unit according to claim 1,
wherein the cover member is provided to fill a space between the upper end of the cell assembly and the inner surface of the upper plate of the case.

7. The battery unit according to claim 1,
wherein the cover member is positioned between the top frame and the cell assembly.

8. The battery unit according to claim 1,
wherein the block member is provided on the outer side of the first busbar frame.

9. The battery unit according to claim 1,
wherein the block member is configured to penetrate the busbar frame assembly.

10. The battery unit according to claim 1,
wherein the busbar frame assembly further comprises at least one fastening member configured to couple the top frame and the first busbar frame.

11. The battery unit according to claim 10,
wherein the fastening members are provided in plurality, and
wherein the block member is configured to penetrate between the plurality of fastening members spaced apart at a predetermined distance.

12. The battery unit according to claim 1, further comprising:
a vent blocking block interposed between the cell assembly and the first busbar frame.

13. The battery unit according to claim 12,
wherein the cell assembly further comprises a barrier member provided between the battery cells, and
wherein the vent blocking block is provided between the barrier member and the cell terrace where the electrode lead is drawn out from the battery cell.

14. The battery unit according to claim 12,
wherein the vent blocking blocks are disposed in plurality on one side and the other side of the battery cell, respectively, and
wherein the vent blocking blocks are provided on one side of the battery cell in a greater number than on the other side of the battery cell.

15. The battery unit according to claim 1,
wherein the battery cell comprises a fixing member configured to fix the upper surface.

16. A battery pack comprising at least one battery unit described in any one of claims 1 to 15.

17. A vehicle comprising at least one battery unit described in any one of claims 1 to 15.
